# EUROPEAN PATENT SPECIFICATION

(11) **EP 0 407 180 B1**
(45) Date of publication and mention of the grant of the patent: **25.01.1995**
(21) Application number: 90307336.9
(22) Date of filing: 05.07.1990
(51) Int. Cl.: B01F 3/04, C02F 3/20, C01F 11/18, B01J 10/00

(54) **Gas-liquid contacting apparatus**
Kontaktvorrichtung für Gas und Flüssigkeit
Dispositif de contact pour gaz et liquide

(30) Priority: 05.07.1989 JP 171859/89
(43) Date of publication of application: 09.01.1991
(73) Proprietor: OKUTAMA KOGYO CO., LTD., Shisbuya-ku Tokyo-to (JP)
(72) Inventor: Satoh, Shunji, Fussa-shi, Tokyo-to (JP); Yokokura, Minoru, Ome-shi, Tokyo-to (JP)
(74) Representative: Baverstock, Michael George Douglas

(56) References cited:
- DE-A- 3 710 739
- US-A- 3 650 513
- US-A- 3 911 064
- US-A- 4 639 314
- PATENT ABSTRACTS OF JAPAN vol. 9, no. 45 (C-268)(1768), 26 February 1985; & JP - A - 59186699 (HITACHI KINZOKU K.K.) 23.10.1984

## Description

The present invention relates to a gas-liquid contacting apparatus and, more particularly, to a gas-liquid contacting apparatus comprising a vessel holding a liquid and a gas sparger unit immersed in the liquid, from which a gas is blown as bubbles into the liquid. The gas-liquid contacting apparatus of the invention is advantageous in respect of its high efficiency of gas absorption in the liquid; prevention of scale deposition on the walls; absence of stagnant liquid in the gas sparger unit; and little splashing of the liquid, so that the apparatus can be used advantageously in any process in which the efficiency of gas-liquid contacting is a key parameter for the improvement of productivity, such as manufacture of precipated calcium carbonate by the carbonation of milk of lime, gas-liquid contacting reactions in petrochemical processes, gas absorbers in crude oil desulfurizers, aeration of sewage in the activated sludge method, and aerobic culture of microorganisms in a liquid culture medium.

Most simply in the prior art, contacting of a gas and a liquid in various processes is conducted by immersing a gas-bubbling tube into the liquid and blowing the gas out of the nozzle of the tube to rise in the liquid in the form of bubbles. This traditional gas-liquid contacting means has several problems. For example, the gas-bubbling tube is always in the liquid at least during bubbling so that the surface of the tube is unavoidably susceptible to scale deposition or blinding of the nozzle or perforation so that the conditions of the gas bubbling are gradually changed in the course of time, in addition to the disadvantages of infutile stagnancy of the liquid in the tube as a consequence of deposition of the suspended material or reaction product and excessive splashing of the liquid, i.e. rising and sinking of the liquid surface, caused by the bubbling of the gas.

A gas-liquid contacting apparatus which comprises a vessel for holding a liquid and a gas sparger unit comprising a gas inlet tube and a gas sparger box with a flexible perforated plate made from a rubbery elastomer is known from DE.A-3710 739. However because of the structure of the plate such an apparatus cannot be used in the manufacture of calcium carbonate.

An object of the present invention is to provide, by overcoming the disadvantages and problems in the above described conventional gas-liquid contacting means, a novel and improved gas-liquid contacting apparatus capable of giving a high efficiency of gas-liquid contacting with greatly decreased deposition of scale and stability in the bubbling condition of the gas in the course of time as well as with decreased stagnancy of the liquid as a consequence of deposition of the suspended material or solid reaction product, and little splashing of the liquid.

The gas-liquid contacting apparatus of the invention comprises:
(A) a vessel for holding a liquid; and
(B) a gas sparger unit comprising
   (a) a gas inlet tube;
   (b) a gas sparger box, communicating with the gas inlet tube said gas sparger box being open upwardly and the open upper end being covered with a perforated plate made from a rubbery elastomer, said plate having perforations each having a diameter in the range from 3 to 10 mm; and
   (c) a liquid-seal tube connected to the lower portion of the gas sparger box and extending downwardly and opening at the lower end.

In the drawings:
Figure 1 is a perspective view of the gas sparger unit in an example of the inventive apparatus, disassembled into parts.
Figure 2 is a plan view of the gas sparger unit in the inventive apparatus with the perforated plates in the gas sparger boxes removed.
Figure 3 is a vertical axial cross sectional view of the inventive apparatus, of which the gas sparger unit is the same as in Figure 2 as cut along the line III-III.
Figures 4 and 5 are each a schematic plan view of different forms of the gas sparger unit.
Figures 6a to 6e are each a schematic vertical cross sectional view of a gas-liquid contacting apparatus with gas sparger units of different types in the prior art.

As is described above, the inventive gas-liquid contacting apparatus consists of a vessel as a liquid holder and a gas sparger unit immersed in the liquid held in the vessel. The most characteristic feature of the inventive apparatus consists in the specific and unique structure of the gas sparger unit.

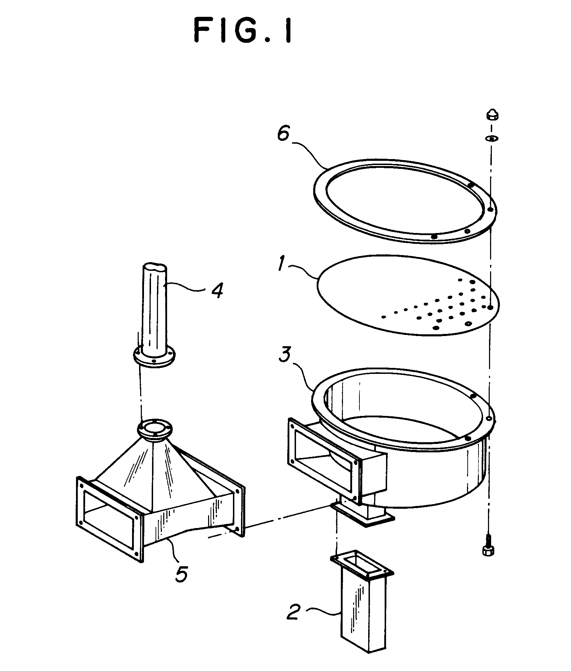

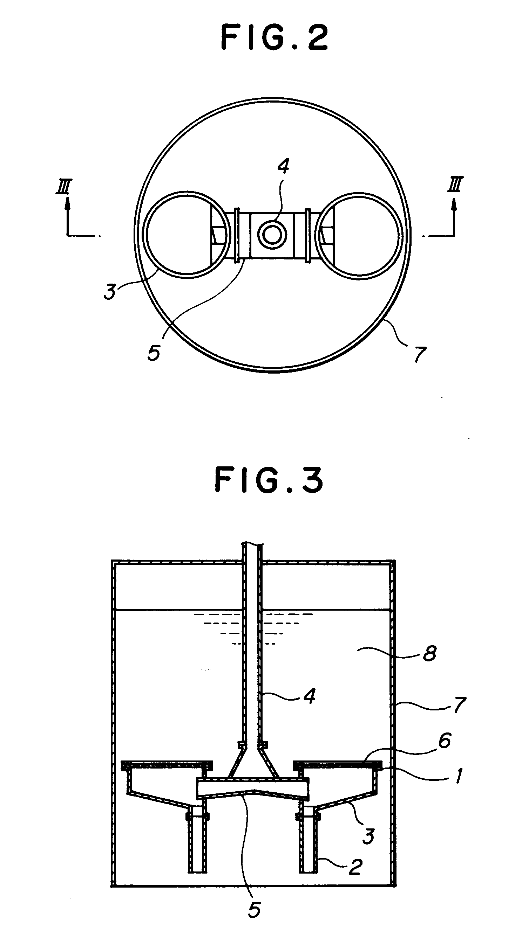

In the following, the structure of the gas sparger unit is described in detail with reference to the accompanying drawings and, in particular, Figures 1 to 3. In Figure 1, which is perspective view of the gas sparger unit as disassembled into parts, as well as in Figures 2 and 3, a vertical gas inlet tube 4 is connected gas-tightly to a two-way manifold 5 at the top thereof using a suitable gasket or packing, if necessary. The two-way manifold 5 has two horizontally facing rectangular openings, to each of which a gas sparger box 3 is connected gas-tightly using a suitable gasket, if necessary. Of course, the manifold is not limited to a two-way one but can be a multiple-way manifold opening in more than two directions. Also it is optional that the gas sparger unit is provided with a single gas sparger box 3 so that the manifold 5 can be omitted and the gas inlet tube 4 is directly connected to a single gas sparger box 3.

The gas sparger box 3 depicted in these figures is, though not limitative, cylindrical and has a rectangular side openings at which it is connected to the two-way manifold 5. At the bottom of the gas sparger box 3, a liquid-seal tube 2 having a rectangular cross section is connected at the top end thereof to the gas sparger box 3 gas-tightly. Of course, the cross section of the liquid-seal tube 2 is not limited to a rectangular form but can be any other form including circular cross sections. The cross sectional dimension of the liquid-seal tube 2 is also not limitative and can be as large as desired although a liquid-seal tube 2 of an unduly small cross section is undesirable because of the risk of clogging with solid matter in the liquid under treatment. The liquid-seal tube 2 extends downwardly so as to have the lower open end thereof at a level close to the bottom of the liquid vessel 7.

The upper surface of the gas sparger box 3 is open and the box 3 is flanged at the upper end. The open upper end of the gas sparger box 3 is covered with a perforated plate 1 which is fastened gas-tightly to the flanged upper end of the box 3 by means of a holder ring or ferrule 6 and several sets of bolts and nuts. When the inventive apparatus is used in a process in which a large volume of a solid material is formed as a product of the process such as the manufacture of calcium carbonate by the carbonation of milk of lime a clogging of the perforations of the perforated plate 1 with the solid matter is avoided. When the gas sparger box 3 is pressurized with the gas introduced thereinto and the plate 1 is made of rubber it is naturally inflated upwardly by the gaseous pressure and it shrinks down when the gaseous pressure is released. Thus, repeated inflation and shrinkage causes solid matter deposited on the perforations to readily fall off the plate 1 so as to resume smooth bubbling of the gas.

The diameter of the perforations in the perforated plate 1 should be as small as possible in order that the gas is bubbled into the liquid 8 as tiny bubbles with a large contacting area with the liquid 8 to increase the efficiency of gas-liquid contacting. It should be noted, however, that perforations of an unduly small diameter are subject to the risk of clogging with the solid matter in the liquid 8 contained in the vessel 7. That is why the perforations have a diameter in the range 3-10 mm.

The liquid-seal tube 2 extending downwardly from the lower portion or bottom of the gas sparger box 3 serves to control and modulate the gaseous pressure inside the gas sparger box 3. Therefore the length of the tube should be large enough to maintain the liquid head or, in other words, to prevent the gas escaping out of the lower open end of the tube into the liquid 8. The liquid-seal tube 2 serves also as a discharge port for solid matter coming into the gas sparger box by settling downwardly and being discharged out of the lower open end thereof on to the bottom of the vessel 7.

The dimensions of the liquid-seal tube 2 should be adequately selected in consideration of various parameters such as the size of the gas sparger box 3, volume of the liquid 8 held in the vessel 7 which defines the liquid head, gaseous pressure, and diameter of the perforations.

The gas sparger unit described above is installed inside a vessel 7 containing the liquid 8 to give the gas-liquid contacting apparatus of the invention. The gas sparger unit should be positioned at a height as low as possible in order to minimize the volume of dead space below the gas sparger boxes 3 although a clearance should be ensured between the lower end of the liquid-seal tube 2 and the bottom of the vessel 7 in order not to disturb the performance of the liquid-seal tube 2.

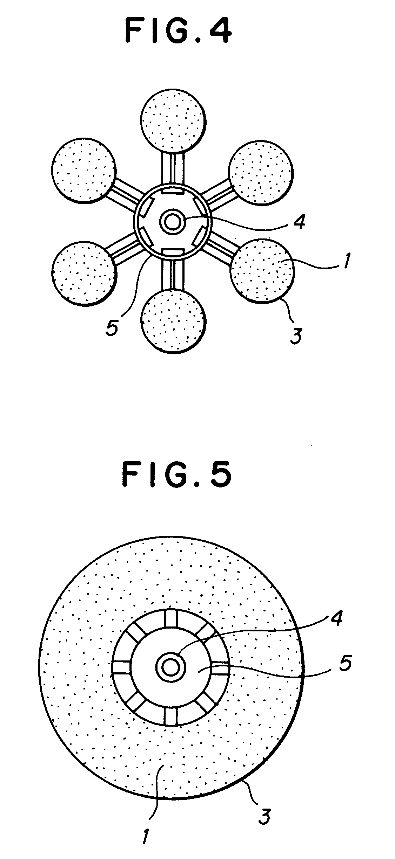

Figure 4 is a schematic plan view of another embodiment of the gas sparger unit used in the inventive apparatus, in which the gas manifold 5 is a six-way manifold communicating with six gas sparger boxes 3 arranged radially. Figure 5 is also a schematic plan view of a further different gas sparger unit used in the inventive apparatus in which the gas manifold 5 is an eight-way manifold opening in eight directions but each of the gas conduits is connected not to a respective independent gas sparger box but jointly to an annularly integrated single gas sparger box 3.

As is understood from the above given description, the gas-liquid contacting apparatus of the present invention is advantageous in several respects including greatly decreased deposition of scale so that the apparatus is kept clean with minimum labor for cleaning, little variation in the condition of gas bubbling in the course of time due to avoidance of clogging of the perforations by solid matter, decreased volume of stagnant liquid in the gas sparger boxes as a result of deposition of the solid product or suspended matter, increased efficiency of gas-liquid contacting to contribute to the reduction of gas volume bubbled into the liquid because of the greatly decreased diameter of the perforations for gas bubbling as a result of the decreased scale deposition around the perforations, decreased splashing of the liquid in the vessel to enhance the capacity of the apparatus per unit time to enhance the productivity of the apparatus, and so on. Therefore, the inventive apparatus is useful in any gas-liquid contacting process in which the efficiency of gas-liquid contacting is an essential key factor.

In the following description, examples and comparative examples are given to illustrate the inventive gas-liquid contacting apparatus in more detail.

### Examples 1 to 5.

A gas sparger unit having the structure illustrated in Figure 1 was installed in a cylindrical liquid vessel 7 of 3.5 m³ effective volume having an inner diameter of 1 m and a depth of 5 m. The gas sparger unit had two gas sparger boxes 3 having a total volume of 50 liters. The upper surface of each of the gas sparger boxes 3 was covered with a perforated rubber plate of 3 mm thickness and 30 cm diameter each having 50 perforations of 5 mm diameter. The upper surface of the perforated rubber plates was at a height of 100 cm above the bottom of the vessel 7. Each of the gas sparger boxes 3 had a liquid-seal tube 2 having a rectangular 10 cm by 5 cm cross section and 35 cm length connected to the bottom of the box 3. The lower open end of the liquid seal tube 2 was at a height of 30 cm above the bottom of the vessel 7.

Milk of lime of 70 g solid/liter concentration was introduced into the vessel 7 in a volume of 2 m³ so that the upper surface of the perforated rubber plates 1 of the gas sparger boxes 3 was 200 cm below the liquid surface.

A gaseous mixture of 30% by volume of carbon dioxide and 70% by volume of nitrogen was continuously bubbled into the milk of lime out of the perforated rubber plates 1 at a rate of 25 m³/hour, 50 m³/hour, 75 m³/hour, 100 m³/hour or 125 m³/hour in Examples 1 to 5, respectively, keeping the milk of lime at a temperature of 58 to 60 °C with gradual increase of the temperature finally to reach 64 to 67°C. After 4 to 5 hours of continued running in this manner, the carbonation of the lime was almost complete with an absorption efficiency of carbon dioxide of 90%, 85%, 80%, 75% and 68% in Examples 1 to 5, respectively. The % splashing of the liquid surface, which is defined as the ratio of the height difference between the highest and lowest heights of the rising and sinking liquid surface to the lowest height of the liquid surface from the vessel bottom, was only 3%, 5%, 5%, 5% and 8% in Examples 1 to 5, respectively. No stagnant liquid was found in the gas sparger boxes 3 in each of these experiments.

In Example 3, the above described procedure of carbonation was repeated several times each time with a fresh volume of the milk of lime. When the overall running time had reached 50 days taking 60 days including the interposed times for the discharge of the carbonated liquid and recharge of the fresh milk of lime, the perforated rubber plates 1 were found to be covered with deposition of scale.

**Table**

| | | Efficiency of CO₂ absorption, % | % splashing of liquid surface |
|---|---|---|---|
| Example | 1 | 90 | 3 |
| | 2 | 85 | 5 |
| | 3 | 80 | 5 |
| | 4 | 75 | 5 |
| | 5 | 68 | 8 |
| Comparative Example | a-1 | 65 | 25 |
| | a-2 | 60 | 30 |
| | a-3 | 55 | 40 |
| | a-4 | 50 | 45 |
| | a-5 | 45 | 50 |
| | b-3 | 60 | 10 |
| | c-3 | 70 | 10 |
| | d-3 | 60 | 30 |
| | e-3 | 65 | 5 |

### Comparative Examples a-1 to a-5.

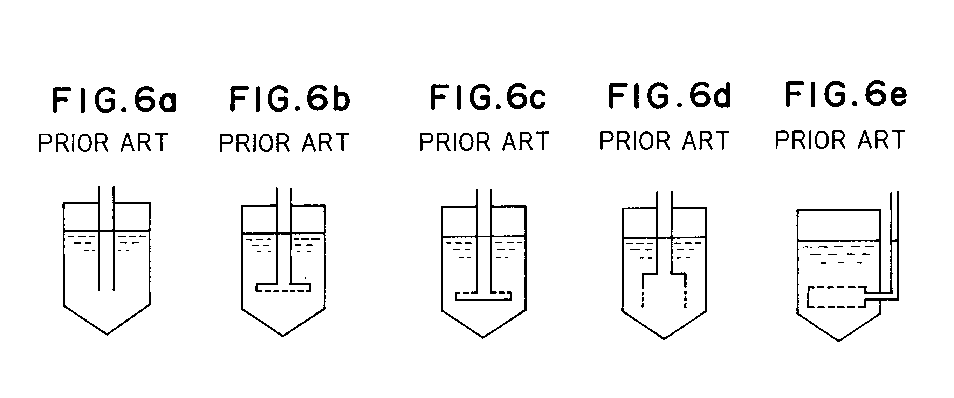

The experimental procedure in these Comparative Examples was substantially the same as in the above described Examples except that the gas sparger unit according to the invention was replaced with a single gas bubbling tube having an inner diameter of 5 cm as is illustrated in Figure 6a. The lower open end of the gas bubbling tube was 100 cm above the vessel bottom and 2 m below the liquid surface. The rate of gas bubbling was 25, 50, 75, 100 and 125 m³/hour in Comparative Examples a-1 to a-5, respectively. The efficiency of carbon dioxide absorption and % splashing of the liquid surface were as shown in the table. No stagnant liquid was found in the gas bubbling tube in each of these experiments.

In comparative Example a-3, deposition of scale was found on the nozzle of the gas bubbling tube when the overall running time had reached 48 hours in the repeated cycles of carbonation, discharge of the carbonated liquid and introduction of a fresh poriton of the milk of lime.

### Comparative Examples b-3, c-3, d-3, e-3.

The experimental procedure in each of these Comparative Examples was substantially the same as in Examples 1 to 5 except that the rate of gas bubbling was always 75 m³/hour and the gas sparger unit used in Examples was replaced with one of those illustrated schematically in Figures 6b, 6c, 6d and 6e, respectively. In these experiments, the height (Figures 6b and 6c) or average height (Figures 6d and 6e) of the surface from which the gas was blown out was adjusted to be 2 m below the liquid surface. No stagnant liquid was found in Comparative Examples b-3 and d-3 but a volume of stagnant liquid was found in Comparative Examples c-3 and e-3. Further, scale deposition was found after 3 days, 1 day, 3 days and 1 day of running in Comparative Examples b-3, c-3, d-3 and e-3, respectively.

## Claims

1. A gas-liquid contacting apparatus which comprises:
(A) a vessel (7) for holding a liquid; and
(B) a gas sparger unit comprising
(a) a gas inlet tube (4);
(b) a gas sparger box (3), communicating with the gas inlet tube, said gas sparger box (3) being open upwardly and the open upper end being covered with a perforated plate (1) made from a rubbery elastomer, characterized in that the perforations each have a diameter in the range from 3 to 10 mm and in that a liquid-seal tube (2) extending downwardly and opening at the lower end is connected to the lower portion of the gas sparger box (3).

2. A gas-liquid contacting apparatus as claimed in claim 1 wherein the gas inlet tube (4) is connected to a manifold (5) opening in at least two directions and each of the openings in the manifold is connected to a gas sparger box (3).

3. Use of the gas-liquid contacting apparatus as claimed in claim 1 or claim 2 in a process requiring contact of a gas with a liquid.

4. Use as claimed in claim 3 wherein the process requiring contact of a gas with a liquid is the manufacture of calcium carbonate.

## Patentansprüche

1. Gas-Flüssigkeit-Kontaktvorrichtung mit
(A) einem Behälter (7) zum Aufnehmen einer Flüssigkeit und
(B) einer Gassprüheinheit mit
(a) einem Gaseinlaßrohr (4) und
(b) einer Gassprühbox (3), die mit dem Gaseinlaßrohr in Verbindung steht, wobei die Gassprühbox (3) nach oben offen ist und das offene obere Ende durch eine perforierte Platte (1) bedeckt ist, die aus einem gummiartigen Elastomer gebildet ist,
dadurch **gekennzeichnet,** daß
die Perforationen einen Durchmesser im Bereich von 3 bis 10 mm aufweisen und ein flüssigdichtes Rohr (2) mit dem unteren Abschnitt der Gassprühbox (3) verbunden ist, wobei sich das flüssigdichte Rohr (2) nach unten erstreckt und am unteren Ende offen ist.

2. Gas-Flüssigkeit-Kontaktvorrichtung nach Anspruch 1, in der das Gaseinlaßrohr (4) mit einem Verteiler (5) verbunden ist, der sich in zumindest zwei Richtungen öffnet, wobei jede der Öffnungen in dem Verteiler mit einer Gassprühbox (3) verbunden ist.

3. Verwendung der Gas-Flüssigkeit-Kontaktvorrichtung nach Anspruch 1 oder 2 in einem Verfahren, welches den Kontakt von einem Gas mit einer Flüssigkeit erfordert.

4. Verwendung nach Anspruch 3, in der das Verfahren, welches den Kontakt von einem Gas mit einer Flüssigkeit erfordert, die Herstellung von Calciumcarbonat ist.

## Revendications

1. Dispositif de contact pour gaz et liquide qui comprend :
(A) un récipient (7) pour contenir un liquide ; et
(B) une unité d'aspersion de gaz comprenant :
(a) un tube d'entrée de gaz (4),
(b) un caisson d'aspersion de gaz (3), communiquant avec le tube d'entrée de gaz, ledit caisson d'aspersion de gaz (3) étant ouvert vers le haut et l'extrémité supérieure ouverte étant couverte d'une plaque perforée (1) faite d'un élastomère caoutchouteux, caractérisé en ce que chaque perforation a un diamètre compris entre 3 et 10 mm et en ce qu'un tube obturé par le liquide (2) s'étendant vers le bas et ouvert à son extrémité inférieure est connecté à la portion inférieure du caisson d'aspersion de gaz (3).

2. Appareil de contact pour gaz et liquide selon la revendication 1 où le tube (4) d'entrée de gaz est connecté à un collecteur (5) ouvrant dans au moins deux directions et chacune des ouvertures du collecteur est connectée à un caisson d'aspersion de gaz (3).

3. Utilisation du dispositif de contact gaz-liquide selon la revendication 1 ou la revendication 2 dans un procédé nécessitant le contact d'un gaz avec un liquide.

4. Utilisation selon la revendication 3 où le procédé nécessitant le contact d'un gaz avec un liquide est la fabrication de carbonate de calcium.
